# EUROPEAN PATENT SPECIFICATION

(11) **EP 4 579 787 B1**
(45) Date of publication and mention of the grant of the patent: **28.10.2026**
(21) Application number: 24222106.7
(22) Date of filing: 20.12.2024
(51) Int. Cl.: H01M 4/131, H01M 4/36, H01M 4/485, H01M 10/054, H01M 4/525

(54) **POSITIVE ELECTRODE SHEET FOR SODIUM ION BATTERY, SODIUM ION BATTERY, AND DEVICE**
POSITIVELEKTRODENFOLIE FÜR NATRIUMIONENBATTERIE, NATRIUMIONENBATTERIE UND VORRICHTUNG
FEUILLE D'ÉLECTRODE POSITIVE POUR BATTERIE SODIUM-ION, BATTERIE SODIUM-ION ET DISPOSITIF

(30) Priority: 28.12.2023 CN 202311850171
(43) Date of publication of application: 02.07.2025
(73) Proprietor: BYD Company Limited, Shenzhen, Guangdong 518118 (CN)
(72) Inventor: LIU, Zhengjiao, Shenzhen, 518118 (CN); QIU, Zhaozheng, Shenzhen, 518118 (CN); PAN, Yi, Shenzhen, 518118 (CN)
(74) Representative: Mathys & Squire

(56) References cited:
- CN-A- 111 834 622
- CN-A- 116 960 273
- CN-A- 117 199 367

## Description

### FIELD

The present disclosure relates to the technical field of sodium ion batteries, and specifically to a positive electrode sheet for a sodium ion battery, a sodium ion battery, and a device.

### BACKGROUND

Sodium ion batteries are a kind of batteries with an energy storage mechanism similar to that of lithium ion batteries. Because the abundance of sodium in the Earth's crust is much higher than lithium, the costs of sodium ion batteries are much lower than lithium ion batteries, so they are expected to meet the low-cost demand for large energy storage devices in the future.

During the first charging process of a sodium ion battery, the formation of a solid electrolyte interface film (SEI film) on a surface of a negative electrode will irreversibly consume a large amount of active sodium ions desodiated from a positive electrode, reducing the capacity per gram and the energy density of the positive electrode of the sodium ion battery. Sodium replenishment for sodium ion batteries can make up for the active sodium ions irreversibly consumed by forming the SEI film on the negative electrode, to improve the energy density of sodium ion batteries, and reduce the gap in energy density from lithium batteries. The ways of sodium replenishment generally comprise positive electrode sodium replenishment and negative electrode sodium replenishment. Positive electrode sodium replenishment has the most promising prospect in industrial applications, due to high safety and no need to change the existing battery production process.

Positive electrode sodium replenishment generally comprises directly mixing a positive electrode sodium replenishing agent having a high irreversible desodiation capacity (such as NaN₃, Na₂O₂, Na₂C₂O₄, Na₅FeO₄, Na₂NiO₂, and NaCrO₂) directly with a positive electrode active material. During the formation process of a sodium ion battery, the positive electrode sodium replenishment agent can release active sodium ions at a certain potential for sodium replenishment in the battery. In the existing solutions for positive electrode sodium replenishment, the high energy density and sustainable discharge capacity of the battery cannot be achieved at the same time.

Therefore, there is a need to develop a solution for positive electrode sodium replenishment that has a good sodium replenishment effect and has no impact on the subsequent electrochemical performance of the sodium ion battery.

### SUMMARY

In view of this, a sacrificial positive electrode sodium replenishment agent that is decomposable to produce a gas and a sodium-rich transition metal oxide are both introduced into a positive electrode sheet for a sodium ion battery, and controlled to have a reasonable distribution in the present disclosure, to reduce the negative effects caused by the use of a single sodium replenishment agent, to make full use of the two types of sodium replenishment agents, and to improve the energy density of the battery without obviously increasing the battery impedance and reducing the sustainable discharge capacity of the sodium ion battery.

Specifically, in a first aspect, the present disclosure provides a positive electrode sheet for a sodium ion battery, which comprises a positive electrode current collector and a sodium replenishment layer and a positive electrode coating laminated on at least a side of the positive electrode current collector. On the same side of the positive electrode current collector, the positive electrode coating is arranged on a side of the sodium replenishment layer away from the positive electrode current collector. The sodium replenishment layer comprises a sodium replenishment agent that is a sodium-rich transition metal oxide. The positive electrode coating comprises a sodium positive electrode active material and a sacrificial positive electrode sodium replenishment agent that is decomposable to produce a gas.

In the positive electrode sheet according to the embodiment of the present disclosure, a sodium-rich transition metal oxide and a sacrificial positive electrode sodium replenishment agent are introduced, and arranged to have a reasonable distribution. In this manner, the sodium replenishment efficiencies of the two types of sodium replenishment agent are improved, and the amount of the sacrificial positive electrode sodium replenishment agent added is reduced, to reduce the amount of gas produced by its decomposition, and thus reduce the damage to the microstructure of the positive electrode sheet and the deterioration of the volumetric energy density of the battery. The problem of elevated liquid-phase diffusion impedance of the positive electrode caused by the distribution of such sodium replenishment agent as the sodium-rich transition metal oxide and the positive electrode active material in the same layer is also avoided, to improve the sustainable discharge capacity of the sodium ion battery. Therefore, a sodium ion battery with excellent comprehensive performance can be prepared with the positive electrode sheet.

In a second aspect, the present disclosure provides a sodium ion battery. The sodium ion battery comprises a positive electrode sheet as described in the first aspect of the present disclosure.

Due to the use of the positive electrode sheet, the utilization rates of the two types of sodium replenishment agents in the sodium ion battery are high, the total amount of reversible sodium in the battery is high, the energy density is improved, the battery impedance is low, and the power performance is good.

In a third aspect, the present disclosure provides a device including the sodium ion battery described in the second aspect of the present disclosure. The device comprises an electric apparatus or an energy storage system.

### BRIEF DESCRIPTION OF THE DRAWINGS

FIG. 1 is a schematic structural view of a positive electrode sheet provided in the present disclosure.
FIG. 2 is another schematic structural view of a positive electrode sheet provided in the present disclosure.

### DETAILED DESCRIPTION

The technical solutions according to the embodiments of the present disclosure will be described with reference to the accompanying drawings.

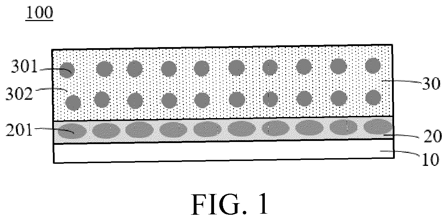

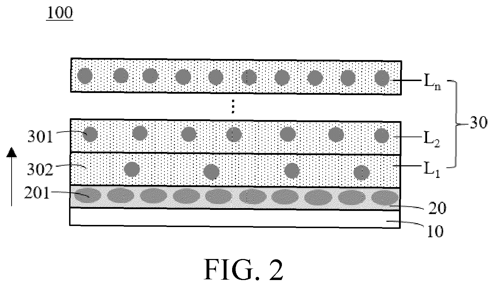

Referring to FIGs. 1 and 2, an embodiment of the present disclosure provides a positive electrode sheet 100 for a sodium ion battery, which comprises a positive electrode current collector 10 and a sodium replenishment layer 20 and a positive electrode coating 30 laminated on at least a side of the positive electrode current collector 10. The sodium replenishment layer 20 comprises a first sodium replenishment agent that is a sodium-rich transition metal oxide 201. The positive electrode coating 30 comprises a sodium positive electrode active material 302 and a sacrificial positive electrode sodium replenishment agent 301 that is decomposable to produce a gas.

The positive electrode sheet 100 comprises both the sacrificial positive electrode sodium replenishment agent 301 that is decomposable to produce a gas and the sodium-rich transition metal oxide sodium replenishment agent 201. Compared with a positive electrode sheet containing the sacrificial positive electrode sodium replenishment agent alone, with the same total amount of sodium replenished, the amount of the sacrificial positive electrode sodium replenishment agent added in the positive electrode sheet of the present disclosure is low, so the total amount of gas generated by its decomposition is correspondingly reduced, thus reducing the damage to the microstructure of the positive electrode sheet due to the release of a large amount of gas and the deterioration of the volumetric energy density of the battery thus caused. The positive electrode coating 30 containing the sacrificial positive electrode sodium replenishment agent and the sodium positive electrode active material is arranged on a surface of the positive electrode sheet 100 away from the positive electrode current collector 10, so that the exhaust path for gas produced by decomposition is shortened, thus facilitating the exhaust of gas. In this way, the polarization of the battery is reduced in the decomposition process, and the decomposition rate and the sodium replenishment effect are improved. Because of the reduced polarization of the battery, the utilization rate of the sodium-rich transition metal oxide sodium replenishment agent is increased to some extent, less gas remains in the positive electrode sheet 100, the battery impedance is also reduced, and the sustainable discharge capacity is improved.

Moreover, the sodium-rich transition metal oxide, that is, the positive electrode sodium replenishment agent, is arranged in the sodium replenishment layer 20 close to the positive electrode current collector 10, and the positive electrode coating 30 containing the sacrificial positive electrode sodium replenishment agent are arranged thereon in the present disclosure. Compared with a positive electrode sheet with a sodium replenishment material containing the sodium-rich transition metal oxide alone, the desodiation potential of the sodium-rich transition metal oxide in the present disclosure will not increase gradually in a direction away from the positive electrode current collector 10, to ensure a high sodium replenishment efficiency. Moreover, compared with a positive electrode sheet with a sodium replenishment material containing the sodium-rich transition metal oxide alone, with the same total sodium replenishment capacity, two types of positive electrode sodium replenishment agents are introduced in the positive electrode of the present disclosure, so the amount of the sodium-rich transition metal oxide added is reduced. Correspondingly, the reduction in the compaction density of the positive electrode sheet due to the low matching of the particle size with the sodium positive electrode active material will also be reduced, which is conducive to the improvement of the energy density of the battery. On the same side of the electrode current collector 10, the sodium replenishment layer 20 is closer to the positive electrode current collector 10 than the positive electrode coating 30. In some embodiments, the sodium replenishment layer 20 is in direct contact with the positive electrode current collector 10. In some embodiments, the positive electrode coating is in direct contact with the sodium replenishment layer 20.

Therefore, in the positive electrode sheet according to the embodiment of the present disclosure, the two types of positive electrode sodium replenishment agents are arranged in layers as above, such that the sodium replenishment efficiencies of the two types of sodium replenishment agent are improved, the energy density of the sodium ion battery is improved, the impedance of the sodium ion battery is reduced, and the sustainable discharge capacity is improved.

In some embodiments of the present disclosure, the sodium replenishment layer 20 is in direct contact with the positive electrode current collector 10, and/or the positive electrode coating 30 is in direct contact with the sodium replenishment layer 20. It will be understood that in some other embodiments of the present disclosure, other coatings may be arranged between the sodium replenishment layer 20 and the positive electrode current collector 10, and other intermediate layers may be arranged between the positive electrode coating 30 and the sodium replenishment layer 20.

In the present disclosure, the sodium-rich transition metal oxide, as a positive electrode sodium replenishment agent, can release sodium ions during the formation and charging process of the sodium ion battery and has a theoretical capacity per gram of about 300-700 mAh/g, which is far greater than the positive electrode active material used at present for sodium ion batteries. After desodiation, the structure of the sodium-rich transition metal oxide changes irreversibly, a part of the main structure or a desodiated product will remain. Additionally, compared with the sodium positive electrode active material, the sodium-rich transition metal oxide has poor sodiation ability. In the working range of the sodium ion battery, the first desodiation capacity of the sodium-rich transition metal oxide is much lower than its first sodium sodiation capacity. That is, the first coulombic efficiency is low (less than 30%), and far below the first coulombic efficiency of the sodium positive electrode active material.

In some embodiments of the present disclosure, the sodium-rich transition metal oxide has a chemical formula of NaₓMO_{y}, where M may comprise, but is not limited to, one or more of Ni, Co, Fe, Mn, Cr, Cu, Mo, Ru, Ir, Sn, and Nb; x ranges from 1 to 6, and y ranges from 1 to 4. For example, the sodium-rich transition metal oxide may comprise, but is not limited to, one or more of Na₂FeO₂, Na₃FeO₃, Na₃FeO₄, Na₅FeO₄, Na₂NiO₂, Na₂CuO₂, Na₆MnO₄, and Na₆CoO₄. The sodium replenishment layer 20 may comprise one or more sodium-rich transition metal oxides. In some embodiments of the present disclosure, the sodium-rich transition metal oxide may or may not have an electrically conductive coating layer on the surface, and preferably has an electrically conductive coating layer.

In the present disclosure, the sacrificial positive electrode sodium replenishment agent can be decomposed at a voltage greater than its desodiation potential, to release active sodium ions and produce a large amount of gas, thus achieving a sodium replenishment effect. After the sacrificial positive electrode sodium replenishment agent is decomposed, the main structure does not exist, and sodiation can't be carried out. Therefore, this type of sodium replenishment agent only has a desodiation capacity, and does not have a sodiation capacity. In an embodiment of the present disclosure, the sacrificial positive electrode sodium replenishment agent may be, but is not limited to, one or more selected from sodium azide (NaN₃), sodium amide (NaNH₂), sodium phosphide (Na₃P), sodium sulfide (Na₂S), sodium peroxide (Na₂O₂), sodium carbonate (Na₂CO₃), sodium oxalate (Na₂C₂O₄), sodium squarate (Na₂C₄O₄), and sodium nitrite (NaNO₂).

In an embodiment of the present disclosure, the sodium positive electrode active material may comprise one or more of a sodium transition metal oxide, a polyanionic compound of sodium, Prussian blue sodium and its analogues, and a sodium-containing organic compound (such as Na₂C₆O₆). The sodium transition metal oxide comprises, but is not limited to, sodium cobalt oxide (NaCoO₂), sodium manganese oxide (NaMnO₂), sodium nickel oxide (NaNiO₂), sodium iron oxide (NaFeO₂), sodium vanadium oxide (NaVO₂), Na(FeₓMn₁₋ₓ)O₂ (0<x<1), Na(NiₓMn₁₋ₓ)O₂ (0<x<1), and Na_{2/3}(NiₓMn_{y}Ti_{1-x-y})O₂ (0<x<1, 0<y<1). The polyanionic compound of sodium comprises, but is not limited to, one or more of sodium vanadium phosphate (Na₃V₂(PO₄)₃), sodium vanadium phosphate fluoride (NaVPO₄F), sodium vanadium manganese phosphate, Na₂FePO₄F, Na₃V₂O₂(PO₄)₂F, and Na₂Fe₂(SO₄)₃. It will be understood that these sodium positive electrode active materials may be undoped or doped, and may or may not have an electrically conductive coating layer on the surface.

In the present disclosure, the sodium replenishment layer 20 may or may not contain the sodium positive electrode active material. In an embodiment of the present disclosure, the sodium replenishment layer 20 may comprise the following components in percentages by weight: 50% to 90% of a first positive electrode sodium replenishment agent, 0 to 40% of a second sodium positive electrode active material, 0.5 to 10% of a binder, and 0.5 to 10% of an electrically conductive agent. The choice of the second sodium positive electrode active material can be made with reference to the description for the positive electrode active material in the positive electrode coating 30 of the present disclosure. The positive electrode active material in the positive electrode coating 30 and the second sodium positive electrode active material can be the same or different material(s). The content in percentages by weight of the first positive electrode sodium replenishment agent in the sodium replenishment layer 20 is greater than that of the second sodium positive electrode active material, so that the sodium replenishment layer 20 provides a high sodium replenishment capacity, to improve the energy density of the battery. The existence of an appropriate amount of the binder can ensure the adhesion of the sodium replenishment layer 20 to the positive electrode current collector 10, and the existence of an appropriate amount of the electrically conductive agent improves the electron conduction ability of the sodium replenishment layer 20. Specifically, the content in percentages by weight of the first positive electrode sodium replenishment agent in the sodium replenishment layer 20 may be 50%, 55%, 60%, 65%, 70%, 75%, 80%, 85% or 90%. The content in percentages by weight of the binder or the electrically conductive agent may be independently 0.8%, 1%, 1.5%, 2%, 2.5%, 3%, 4%, 4.5%, 5%, 6%, 7%, 8% or 9%.

In some embodiments, the sodium replenishment layer 20 comprises no sodium positive electrode active material. That is, the content of the second sodium positive electrode active material in the sodium replenishment layer 20 is 0. In this way, the problems of elevated liquid-phase diffusion impedance of the positive electrode caused by directly mixing of the sodium-rich transition metal oxide and the sodium positive electrode active material and slow liquid-phase transport rate of sodium ions are avoided, to reduce the impedance of the sodium ion battery.

In some other embodiments of the present disclosure, the sodium replenishment layer 20 comprises the second sodium positive electrode active material, in a content in percentages by weight of 10 to 40%, specifically, for example, 12%, 15%, 20%, 25%, 28%, 30%, 35%, or 40%. By an appropriate amount of the second sodium positive electrode active material in the sodium replenishment layer 20, a certain capacity can be contributed by the sodium replenishment layer 20 after the formation of the battery.

In the present disclosure, the positive electrode coating 30 may comprise one layer (as shown in FIG. 1), or multiple layers (that is, the layer number is ≥2, as shown in FIG. 2). When the positive electrode coating 30 comprises one layer (as shown in FIG. 1), the sacrificial positive electrode sodium replenishment agent can be evenly distributed in the sodium positive electrode active material. When the positive electrode coating 30 comprises multiple layers, it may comprise n positive electrode sub-coatings, where N≥2 (as shown in FIG. 2).

In the present disclosure, the proportion of the sodium replenishment capacity provided by the sodium-rich transition metal oxide 201 to the total sodium replenishment capacity provided by the sodium-rich transition metal oxide 201 and the sacrificial positive electrode sodium replenishment agent 301 in the positive electrode sheet 100 is x. The proportion of the sodium replenishment capacity provided by the sacrificial positive electrode sodium replenishment agent 301 to the total sodium replenishment capacity provided by the sodium-rich transition metal oxide 201 and the sacrificial positive electrode sodium replenishment agent 301 in the positive electrode sheet 100 is 1-x. x ranges from 10% to 90%, and is specifically, for example, 15%, 20%, 30%, 40%, 50%, 60%, 70%, 80% or 85%. Accordingly, 1-x ranges from 10% to 90%. By adjusting the proportions of sodium replenishment capacities of the two sodium replenishment agents, the different demands raised by different batteries for energy density, power density, and cycle life can be met. Preferably, x ranges from 50% to 90%, and correspondingly 1-x ranges from 10% to 50%. In this case, the sodium replenishment capacity provided by the sodium-rich transition metal oxide sodium replenishment agent is ≥ the sodium replenishment capacity provided by the sacrificial positive electrode sodium replenishment agent, to reduce the amount of the sacrificial sodium replenishment agent used, and thus reduce the influence of a large amount of gas produced by the decomposition of the sacrificial sodium replenishment agent on the microstructure of the electrode sheet. The sodium replenishment capacity provided by each sodium replenishment agent is equal to the product of the mass and the capacity per gram of the sodium replenishment agent. Here, the capacity per gram is calculated according to the number of active sodium ions actually desodiated in sodium replenishment with each sodium replenishment agent known in the art. For example, for Na₅FeO₄, the corresponding theoretical capacity per gram is 455 mAh/g when 4 sodium ions are desodiated; for Na₆MnO₄, the corresponding theoretical capacity per gram is 520 mAh/g when 5 sodium ions are desodiated; for Na₂CO₃, the corresponding theoretical capacity per gram is 505 mAh/g when 2 sodium ions are desodiated; and for Na₂C₂O₄, the corresponding theoretical capacity per gram is 399 mAh/g when 2 sodium ions are desodiated.

In an embodiment of the present disclosure, the positive electrode coating 30 comprises the following components in percentages by weight: 80% to 99.5% of a sodium positive electrode active material, 0.5 to 10% of a sacrificial positive electrode sodium replenishment agent, 0.1 to 5% of an electrically conductive agent, 0.1 to 5% of a binder, and 0 to 5% of a dispersant. The proportion by weight of each component refers to the proportion of its respective total weight in the positive electrode coating 30 relative to the total weight of the positive electrode coating 30.

In some embodiments of the present disclosure, in the positive electrode coating 30, the total weight of the sacrificial positive electrode sodium replenishment agent accounts for 0.5 to 10% based on the total weight of the sodium positive electrode active material. Whether the positive electrode coating 30 comprises one layer (as shown in FIG. 1) or multiple layers (that is, the layer number is ≥2, as shown in FIG. 2), the proportion in this range is appropriate. The parameter range ensures that the sacrificial positive electrode sodium replenishment agent can provide an appropriately high sodium replenishment capacity, without producing too much gas. Specifically, the proportion may be, for example, 0.5%, 0.6%, 0.8%, 1%, 1.2%, 1.5%, 2%, 2.5%, 3%, 3.5%, 4%, 4.5%, 5%, 6%, 7%, 8%, 9%, or 10%. In some embodiments, the proportion ranges from 1% to 5%. This can ensure that the second positive electrode sodium replenishment agent can make up for the irreversible consumption of active sodium in the battery, without causing a too small reversible capacity of the positive electrode of the battery and Production of too much gas.

In some embodiments of the present disclosure, when the positive electrode coating 30 comprises n positive electrode sub-coatings, in a direction from the positive electrode current collector 10 towards the sodium replenishment layer 20 (that is, the direction indicated by the arrow in FIG. 2), the weight ratio of the sacrificial positive electrode sodium replenishment agent to the sodium positive electrode active material in each positive electrode sub-coating shows an increasing trend.

In the direction from the positive electrode current collector 10 towards the sodium replenishment layer 20, each sub-coating of the positive electrode coating 30 can be sequentially designated as L₁, L₂...Lₙ. Therefore, the sodium replenishment layer 20, the first positive electrode sub-coating L₁, the second positive electrode sub-coating L₂, ... and the nth positive electrode sub-coating Lₙ are sequentially arranged on the surface of the positive electrode current collector 10. If the weight ratio of the sacrificial positive electrode sodium replenishment agent to the sodium positive electrode active material in the first positive electrode sub-coating L₁ is X₁, the weight ratio of the sacrificial positive electrode sodium replenishment agent to the sodium positive electrode active material in the second positive electrode sub-coating L₂ is X₂, ... and the weight ratio of the sacrificial positive electrode sodium replenishment agent to the sodium positive electrode active material in the nth positive electrode sub-coating Lₙ is Xₙ, then the "increase trend" can be expressed as: X₁≤X₂≤X₃...≤Xₙ, where Xₙ>X₁, and X₁≥0. For example, the "increase trend" may be a non-sequential increase mode such as increase-constant-increase, or constant and then sequential increase or constant-increase-constant-increase; or a layer-by-layer sequential increase mode (such as X₁<X₂<X₃... <Xₙ, X₁≥0).

In the present disclosure, the weight ratio of the sacrificial positive electrode sodium replenishment agent to the sodium positive electrode active material in the positive electrode sub-coating is controlled to show an increasing trend in the direction away from the positive electrode current collector 10. This facilitates the smooth exhaust of gas produced by decomposition of the sacrificial positive electrode sodium replenishment agent in each positive electrode sub-coating close to the positive electrode current collector, to reduce the polarization of the battery, and cause the sacrificial positive electrode sodium replenishment agent in each positive electrode sub-coating to have a substantially the same desodiation potential. Thus, the decomposition ratio and the sodium replenishment efficiency of the sacrificial positive electrode sodium replenishment agent in the positive electrode sub-coating are high. Moreover, the reduced polarization of the battery reduces the overall impedance of the battery, to improve the sustainable discharge capacity of the battery. Additionally, after the sacrificial positive electrode sodium replenishment agent is decomposed, the pores formed in each positive electrode sub-coating can also form a gradient pore structure layer by layer. The gradient pore structure can increase the overall porosity of the positive electrode sheet and decrease the tortuosity of the pores without obviously increasing the volume of the positive electrode sheet and obviously reducing the volumetric energy density of the battery, to further reduce the overall impedance of the battery, and improve the power performance of the battery.

In some embodiments of the present disclosure, when n positive electrode sub-coatings are included, in the direction from the positive electrode current collector 10 towards the sodium replenishment layer 20, the weight ratio of the sacrificial positive electrode sodium replenishment agent to the sodium positive electrode active material in each positive electrode sub-coating increase sequentially layer by layer. This facilitates the smooth exhaust of gas produced by decomposition of the sacrificial positive electrode sodium replenishment agent in the positive electrode-coating 30, and causes the pore structure of the positive electrode coating 30 to have a porosity increasing gradually in the direction indicated by the arrow after the decomposition, to reduce the battery impedance.

In some embodiments of the present disclosure, among the n positive electrode sub-coatings, at least two adjacent layers meet: Aₘ/(Dₘ/Dₘ₋₁)-Aₘ₋₁≥5%, where Aₘ₋₁ is the proportion by weight of the sacrificial positive electrode sodium replenishment agent in an (m-1)th positive electrode sub-coating relative to the total weight of the sacrificial positive electrode sodium replenishment agent in the positive electrode coating, Aₘ is the proportion by weight of the sacrificial positive electrode sodium replenishment agent in an mth positive electrode sub-coating relative to the total weight of the sacrificial positive electrode sodium replenishment agent in the positive electrode coating, Dₘ₋₁ is the thickness of the (m-1)th positive electrode sub-coating, Dₘ is the thickness of the mth positive electrode sub-coating, and m is any integer selected from 2 to n. At the same side of the positive electrode current collector, the (m-1)th positive electrode sub-coating is closer to the positive electrode current collector than the mth positive electrode sub-coating. In this way, after the decomposition of the sacrificial positive electrode sodium replenishment agent, the porosities of at least two adjacent positive electrode sub-coatings can be clearly distinguished, to reduce the battery impedance, and improve the power performance. Further, among the n positive electrode sub-coatings, any two adjacent positive electrode sub-coatings meet: Aₘ/(Dₘ/Dₘ₋₁)-Aₘ₋₁≥5%. After the formation of the battery, the porosity formed in the positive electrode coating 30 increases layer by layer in the direction away from the positive electrode current collector 10, to achieve a better effect in reducing the battery impedance and improving the power performance. Optionally, Aₘ/(Dₘ/Dₘ₋₁)-Aₘ₋₁≥10%, for example, Aₘ/(Dₘ/Dₘ₋₁)-Aₘ₋₁ is specifically 10%, 15%, 20%, 25%, 30%, 40%, 50%, or 60%.

For example, in some embodiments, when the thickness of each positive electrode sub-coating is substantially the same (for example, Dₘ/Dₘ₋₁=1), among the n positive electrode sub-coatings, any two adjacent positive electrode sub-coatings meet: Aₘ-Aₘ₋₁≥5%, where m is any integer selected from 2 to n. If the proportion by weight of the sacrificial positive electrode sodium replenishment agent in the first positive electrode sub-coating L₁ relative to the total weight of the sacrificial positive electrode sodium replenishment agent in the positive electrode coating 30 is Y₁, the proportion by weight of the sacrificial positive electrode sodium replenishment agent in the second positive electrode sub-coating L₂ relative to the total weight of the sacrificial positive electrode sodium replenishment agent in the positive electrode coating 30 is Y₂, ... and the proportion by weight of the sacrificial positive electrode sodium replenishment agent in the nth positive electrode sub-coating Lₙ relative to the total weight of the sacrificial positive electrode sodium replenishment agent in the positive electrode coating 30 is Yₙ. If Dₘ/Dₘ₋₁=1, then |Y₂-Y₁|, |Y₃-Y₂|, ... and |Yₙ-Yₙ₋₁| are all ≥5%, and preferably ≥10%. Y₁ may be greater than or equal to 0. In some embodiments, when n=2, Y₁=20%, and Y₂=80%; or Y₁=30%, and Y₂=70%; or Y₁=40%, and Y₂=60%; or Y₁=45%, and Y₂=55%. When n=3, Y₁=23%, Y₂=33%, and Y₃=44%; or Y₁=20%, Y₂=30%, and Y₃=50%; or Y₁=10%, Y₂=30%, and Y₃=60%.

In an embodiment of the present disclosure, the proportion by weight of the sodium positive electrode active material in each positive electrode sub-coating is 80% or higher, for example, in the range of 80% to 99.5%. Therefore, each positive electrode sub-coating can provide a high reversible capacity, to ensure that the whole positive electrode sheet has a high reversible capacity. For example, in the case of the first positive electrode sub-coating L₁, the proportion by weight of the sodium positive electrode active material in the first positive electrode sub-coating L₁ relative to the total weight of the first positive electrode sub-coating L₁ is 80% or higher, and further 90% or higher.

In the present disclosure, the single-sided areal density of each sublayer of the positive electrode material may be equal, or not. In some embodiments of the present disclosure, the single-sided areal density of each sublayer of the positive electrode material is equal, to ensure that the laminated structure is more stable.

In the present disclosure, whether the positive electrode coating 30 comprises one layer, or multiple layers, the single-sided areal density of the positive electrode coating 30 is larger than the single-sided areal density of the sodium replenishment layer 20. The positive electrode coating 30 is the main reversible capacity providing layer of the battery, and a higher single-sided areal density than that of the sodium replenishment layer 20 can ensure a high energy density and discharge capacity of the battery.

In an embodiment of the present disclosure, the single-sided areal density of the sodium replenishment layer 20 may range from 1 g/m² to 50 g/m². This can ensure that the sodium replenishment capacity provided by the first positive electrode sodium replenishment agent is appropriate to some extent, and ensure that the comprehensive performance of the sodium ion battery is better. Therefore, a non-obvious sodium replenishment effect for the battery due to an insufficient sodium replenishment capacity of the first positive electrode sodium replenishment agent will be avoided, and the amount of sodium replenishment to the sodium ion battery will not be caused to exceed a reasonable level in current battery design due to too much addition of the first positive electrode sodium replenishment agent. In some embodiments, the single-sided areal density of the sodium replenishment layer 20 is 1 g/m² to 20 g/m², and specifically, for example, 1.0 g/m² 1.5 g/m², 2 g/m², 2.5 g/m², 3.0 g/m², 4.0 g/m², 5.0 g/m², 6.0 g/m², 7.0 g/m², 8.0 g/m², 9 g/m², 10.0 g/m², 15.0 g/m² or 20.0 g/m². This improves the utilization rate of the first positive electrode sodium replenishment agent, and the sodium ion battery has higher positive capacity per gram and first coulombic efficiency.

In an embodiment of the present disclosure, the single-sided areal density of the positive electrode coating 30 may range from 50 g/m² to 500 g/m², and is specifically, for example, 60 g/m² 80 g/m², 100 g/m², 150 g/m², 200 g/m², 210 g/m², 220 g/m², 250 g/m², 300 g/m², 350 g/m², 400 g/m², or 450 g/m². If the single-sided areal density of the positive electrode coating is in a high range, the sodium ion battery can have a positive electrode with a high capacity per gram, and the sacrificial sodium replenishment agent is ensured to provide an appropriate sodium replenishment capacity. In some embodiments, the single-sided areal density of the positive electrode coating 30 ranges from 100 to 300 g/m².

In the present disclosure, the thickness of the sodium replenishment layer 20 is less than that of the positive electrode coating 30. This ensures the high energy density of the sodium ion battery. In an embodiment of the present disclosure, the single-sided thickness of the sodium replenishment layer 20 may range from 1 µm to 50 µm. In some embodiments, the single-sided thickness of the sodium replenishment layer 20 ranges from 1 µm to 20 µm, and further from 1 µm to 10 µm, and is specifically, for example, 1.0 µm, 2.0 µm, 3.0 µm, 4.0 µm, 5.0 µm, 6.0 µm, 7.0 µm, 8.0 µm or 9 µm. In this case, the thickness of the sodium replenishment layer 20 containing the first positive electrode sodium replenishment agent is appropriate, and the sodium ion battery has high total discharge capacity, high energy density, less gas production by the positive electrode during the first charging process of the sodium ion battery, and low battery impedance. In an embodiment of the present disclosure, the single-sided thickness of the positive electrode coating 30 may range from 25 µm to 500 µm, and is specifically, for example, 30 µm, 50 µm, 80 µm, 100 µm, 120 µm, 150 µm, 200 µm, 220 µm, 250 µm, 300 µm, 350 µm, 400 µm, or 450 µm. In some embodiments, the single-sided thickness of the positive electrode coating 30 ranges from 50 µm to 250 µm.

In the present disclosure, the sodium replenishment layer 20 comprises, in addition to the first positive electrode sodium replenishment agent, a binder and a conductive agent. The positive electrode coating 30 comprises, in addition to the sodium positive electrode active material and the sacrificial positive electrode sodium replenishment agent, a binder and a conductive agent. Each conductive agent can be one or more independently selected from conductive carbon black (such as acetylene black, ketjen black, Super-P, and 350G carbon black), carbon nanotubes (single-walled carbon nanotubes or multi-wall carbon nanotubes), graphene carbon fibers, and ordered mesoporous carbon. Each binder can be, but is not limited to, one or more independently selected from polyvinylidene fluoride (PVDF), polytetrafluoroethylene (PTFE), polyolefins (such as polyethylene (PE) and polypropylene (PP)), polyacrylonitrile (PAN), polyacrylic acid (PAA), polyimide (PI), styrene-butadiene rubber (SBR), sodium carboxymethyl cellulose (CMC), sodium alginate (SA), and gelatin. In some embodiments, the sodium replenishment layer 20 and the positive electrode coating 30 may further contain a dispersant. Each dispersant may be one or more selected from polyvinylpyrrolidone (PVP) and polyvinyl alcohol (PVA), etc.

The sodium replenishment layer 20 can be formed by coating a base coat slurry containing the first positive electrode sodium replenishment agent and a solvent, and drying. The coating method may comprise, but is not limited to, one of spin coating, brush coating, spray coating, dip coating, and blade coating, and a combination of one or more thereof. Similarly, the positive electrode coating 30 can be formed by coating a positive electrode slurry containing the sodium positive electrode active material, the sacrificial positive electrode sodium replenishment agent, and a solvent, and drying.

The solvent contained in each slurry can be the same or different, and can be, but is not limited to, one or more independently selected from a pyrrolidone (such as N-methylpyrrolidone (NMP)) and N-ethylpyrrolidone, etc.), a cyclic ether (such as tetrahydrofuran and methyltetrahydrofuran), dimethyl sulfoxide, a ketone (such as acetone and butanone), a lactone (such as butyrolactone and caprolactone) and the like. The solid content of each slurry is not particularly limited, provided that the fluidity and uniformity meet the requirement for coating of the slurry. Generally, the solid content of the base coat slurry ranges from 5% to 50%. The solid content of the positive electrode slurry ranges from 50% to 70%.

When the positive electrode coating 30 comprises one layer, one positive electrode slurry is used. When the positive electrode coating 30 comprises multiple layers, the number of positive electrode slurries used corresponds to the layer number of the positive electrode coating 30. Additionally, each layer of slurry can be coated and laminated simultaneously or sequentially, or coated on a coating formed after drying the previous slurry. For example, when the positive electrode coating 30 comprises one layer, one positive electrode slurry can be directly coated on the base coat slurry (simultaneously or sequentially), baked to remove the solvent, and rolled. If double-sided coating is required, the above operation is repeated on the other side surface of the positive electrode current collector 10. Alternatively, the base coat slurry is coated on one side surface of the positive electrode current collector 10 and dried to form the sodium replenishment layer 20. The positive electrode slurry is coated on the sodium replenishment layer 20, and dried to form the positive electrode coating 30. Then, they are rolled.

In the present disclosure, the positive electrode current collector 10 may comprise, but is not limited to, an aluminum foil, an aluminum alloy foil, an aluminum-plated polymer film, or the above-mentioned materials coated with carbon on the surface. In some embodiments of the present disclosure, the positive electrode current collector 10 is an aluminum foil. In the present disclosure, a laminated structure of the sodium replenishment layer 20 and the positive electrode coating 30 (as shown in FIGs. 1 and 2) can be formed on one side surface of the positive electrode current collector 10, or a laminated structure of the sodium replenishment layer 20 and the positive electrode coating 30 is formed on two opposite side surfaces of the positive electrode current collector 10.

An embodiment of the present disclosure further provides a sodium ion battery. The sodium ion battery comprises a positive electrode sheet 100 according to the above embodiments of the present disclosure.

In an embodiment of the present disclosure, the sodium ion battery further comprises a negative electrode sheet, and a separator and an electrolyte solution arranged between the negative electrode sheet and the positive electrode sheet.

The negative electrode sheet generally comprises a negative electrode current collector and a negative electrode material layer arranged on at least one side surface of the negative electrode current collector. The negative electrode material layer generally comprises a negative electrode active material, a conductive agent, and a binder. In an embodiment of the present disclosure, the negative electrode active material for the sodium ion battery may be one or more selected from hard carbon, soft carbon, graphite, mesocarbon microspheres, and a silicon-carbon composite material.

The separator is used to isolate the positive electrode sheet and the negative electrode sheet, to keep the insulation and liquid retention therebetween. The separator, the positive electrode sheet, and the negative electrode sheet jointly form a battery core. The battery core is accommodated in a battery casing, and impregnated by the electrolyte solution contained in the casing. In some embodiments of the present disclosure, the sodium ion battery can be assembled by the following method. The positive electrode sheet, the separator, and the negative electrode sheet are sequentially stacked, and fabricated into a battery core. The battery core is accommodated in a battery casing, an electrolyte solution is injected, and then the battery casing is sealed, to produce a battery. The battery core can be wound or laminated.

The separator can be made of any separator material in the battery. Exemplarily, the separator may comprise, but is not limited to, a polymer separator such as a single-layer polypropylene (PP) film, a single-layer polyethylene (PE) film, a two-layer PP/PE film, a two-layer PP/PP film, and a three-layer PP/PE/PP film, or non-woven cloth. The electrolyte solution comprises an electrolyte salt and an organic solvent. The specific types and compositions of the electrolyte salt and the organic solvent are conventional choices in the field of batteries, and can be selected according to actual needs.

An embodiment of the present disclosure further provides a device, which comprises a sodium ion battery according to the embodiment of the present disclosure. The device may be an electric apparatus such as an electric vehicle (such as an automobile, a motorcycle, or a bicycle), an electric toy, and a 3C product (such as a mobile phone a notebook computer, a tablet computer, a computer with stylus input, an electronic book player, and a wearable apparatus), or an energy storage system. The energy storage system may comprise multiple sodium ion batteries as describe above and a battery management system. The energy storage system can also power the electric apparatus. The electric apparatus powered by the sodium ion battery has long operation time and fast charging speed.

The technical solutions of the present disclosure will be further described with reference to numerous specific examples.

### Example 1

A positive electrode sheet for a sodium ion battery is prepared through a process as follows.

A first positive electrode sodium replenishment agent (specifically Na₅FeO₄ with a carbon coating layer on the surface, where the coating layer material accounted for 3 wt%), the binder PVDF, the conductive agent Super-P, and the solvent NMP are mixed at a weight ratio of 80: 10: 10: 150. The mixture is stirred until uniform to obtain a base coat slurry with a solid content of 40.0 wt%. The base coat slurry is coated on one side surface of a 13 µm-thick aluminum foil used as a positive electrode current collector under a controlled coating condition, and dried to form a sodium replenishment layer with a single-sided areal density of 8.4 g/m² and a thickness of 7±1 µm. Then, the base coat slurry is coated on the other side surface (back surface) of the aluminum foil and dried, to obtain an aluminum foil with a sodium replenishment layer on both side surfaces.

The sodium positive electrode active materialNa₃V₂(PO₄)₃, the sacrificial sodium replenishment agent Na₂CO₃, the binder PVDF, the conductive agent Super-P, the dispersant PVP, and the solvent NMP are prepared into two slurries for positive electrode sub-coatings at different mixing ratios. The slurry for a lower coating close to the sodium replenishment layer has a composition of: Na₃V₂(PO₄)₃: Na₂CO₃: PVDF: Super-P: PVP: NMP =100: 2: 3: 2: 0.3: 68, and a solid content of 61 wt%. The slurry for an upper coating away from the sodium replenishment layer has a composition of: Na₃V₂(PO₄)₃: Na₂CO₃: PVDF: Super-P: PVP: NMP =100: 4: 3: 2: 0.3: 70, and a solid content of 61 wt%. The slurry for the lower coating and the slurry for the upper coating are coated and laminated on the sodium replenishment layer simultaneously, to form two positive electrode sub-coatings having the same areal density after drying. The sum of single-sided areal densities of the two positive electrode sub-coatings is 200 g/m². Then, the slurry for the lower coating and the slurry for the upper coating are coated on the back surface of the sodium replenishment layer and dried, to obtain a double-sided positive electrode sheet for use. In the positive electrode sheet, the ratio of sodium replenishment capacities provided by the first positive electrode sodium replenishment agent and the sacrificial sodium replenishment agent is 50%: 50%.

### Preparation of sodium ion battery:

(1) Preparation of negative electrode sheet: The negative electrode active material spherical hard carbon, the conductive carbon black Super-P, the binder styrene-butadiene rubber (SBR), carboxymethyl cellulose (CMC), and water are mixed at a weight ratio of 100: 1: 1.5: 1.5: 150, to prepare a negative electrode slurry with a solid content of 41%. The negative electrode slurry is coated on one side surface of a copper foil, and dried to obtain a negative electrode active material layer with a single-sided areal density of 80 g/m². Then the negative electrode slurry is coated on the back side surface of the copper foil, and dried, to obtain a double-sided negative electrode sheet.
(2) The positive electrode sheet and the negative electrode sheet obtained are rolled, cut, die cut, and stacked alternately with a separator (specifically a 14 µm-thick PP separator) (in such a manner that the positive electrode sheet and the negative electrode sheet are isolated by the separator), to form a battery core for a sodium ion battery. Then, the battery core is placed in a sodium ion battery casing (having a size of 150*100*25 mm), an electrolyte solution for sodium ion battery (the electrolyte is obtained by dissolving NaPF₆ in a mixed solvent of EC:DEC:EMC (volume ratio 1:1:1), where the concentration of NaPF₆ is 1 M) is injected. The battery casing is sealed and an air bag is reserved. After infiltration, formation, aging, capacity grading and other procedures, a sodium ion battery is prepared, which is used for the subsequent electrochemical performance test.

### Example 2

Example 2 differs from Example 1 in that the positive electrode coating has one layer. The positive electrode coating is obtained by coating a positive electrode coating slurry prepared with Na₃V₂(PO₄)₃: Na₂CO₃: PVDF: Super-P: PVP: NMP =100: 3: 3: 2: 0.3: 68 (weight ratio) and having a solid content of 61 wt%, and drying. The positive electrode coating has a single-sided areal density of 200 g/m², and a thickness of 100 µm.

Following the method described in Example 1, the positive electrode sheet in Example 2 is assembled into a sodium ion battery.

### Example 3

A positive electrode sheet for a sodium ion battery is prepared through a process which mainly differs from Example 1 in that the first positive electrode sodium replenishment agent is replaced by Na₆MnO₄ with a carbon coating layer on the surface, where the coating layer material accounted for 2.5 wt%. In the positive electrode sheet prepared in Example 3, the sodium replenishment layer has a single-sided areal density of 7.3 g/m², and a thickness of 6±1 µm; and the ratio of sodium replenishment capacities provided by the first positive electrode sodium replenishment agent and the sacrificial sodium replenishment agent is 50%: 50%.

Following the method described in Example 1, the positive electrode sheet in Example 3 is assembled into a sodium ion battery.

### Example 4

A positive electrode sheet for a sodium ion battery is prepared through a process which mainly differs from Example 3 in that the positive electrode coating has one layer. The single-sided areal density is still 200 g/m². The positive electrode coating is obtained by coating a positive electrode coating slurry prepared with Na₃V₂(PO₄)₃: Na₂CO₃: PVDF: Super-P: PVP: NMP =100: 3: 3: 2: 0.3: 69 (weight ratio), and drying.

Following the method described in Example 1, the positive electrode sheet in Example 4 is assembled into a sodium ion battery.

### Example 5

A positive electrode sheet for a sodium ion battery is prepared through a process which mainly differs from Example 2 in that the sacrificial sodium replenishment agent Na₂CO₃ is replaced by Na₂C₂O₄. The positive electrode coating is obtained by coating a positive electrode coating slurry prepared with Na₃V₂(PO₄)₃: Na₂C₂O₄: PVDF: Super-P: PVP: NMP =100: 3.8: 3: 2: 0.3: 69 (weight ratio), and drying. In the positive electrode coating for a positive electrode sheet prepared in Example 5, the ratio of sodium replenishment capacities provided by the first positive electrode sodium replenishment agent and the sacrificial sodium replenishment agent is 50%: 50%.

Following the method described in Example 1, the positive electrode sheet in Example 5 is assembled into a sodium ion battery.

### Example 6

A positive electrode sheet for a sodium ion battery is prepared through a process which mainly differs from Example 2 in that the first positive electrode sodium replenishment agent used is Na₅FeO₄ without a carbon coating layer on the surface.

Following the method described in Example 1, the positive electrode sheet in Example 6 is assembled into a sodium ion battery.

### Example 7

The positive electrode sheet in Example 7 mainly differs from that in Example 2 in that the sodium replenishment layer further has the sodium positive electrode active material Na₃V₂(PO₄)₃.

In Example 7, the sodium replenishment layer is prepared by coating a base coat slurry obtained by mixing the first positive electrode sodium replenishment agent, Na₃V₂(PO₄)₃, the binder PVDF, the conductive agent Super-P, and the solvent NMP at a weight ratio of 40: 40: 10: 10: 150, and drying. The sodium replenishment layer has a single-sided areal density of 16.8 g/m², and a single-sided thickness of 14±1 µm. The positive electrode coating slurry with the same composition as that in Example 2 is coated on the sodium replenishment layer, and dried to form a positive electrode coating having a single-sided areal density of 193 g/m2.

The operations of forming the sodium replenishment layer and the positive electrode coating are repeated on the other side of the aluminum foil. A double-sided positive electrode sheet is obtained after rolling. In the positive electrode in Example 7, the ratio of sodium replenishment capacities provided by the first positive electrode sodium replenishment agent and the sacrificial sodium replenishment agent is still 50%: 50%.

Following the method described in Example 1, the positive electrode sheet in Example 7 is assembled into a sodium ion battery.

### Example 8

Example 8 mainly differs from Example 2 in that in the positive electrode sheet in Example 8, the ratio of sodium replenishment capacities provided by the first positive electrode sodium replenishment agent and the sacrificial sodium replenishment agent is 66%: 34%.

The positive electrode sheet in Example 8 is prepared as follows.

A base coat slurry having the same composition as that in Example 2 (also the same as that in Example 1) is coated on a surface of a 13 µm-thick aluminum foil used as a positive electrode current collector, and dried to obtain a sodium replenishment layer with a single-sided areal density of 11.0 g/m² and a single-sided thickness of 9±1 µm.

The sodium positive electrode active material Na₃V₂(PO₄)₃, the sacrificial sodium replenishment agent Na₂CO₃, the binder PVDF, the conductive agent Super-P, the dispersant PVP, and the solvent NMP are mixed at a weight ratio of 100: 2: 3: 2: 0.3: 68, and prepared into a positive electrode slurry. The positive electrode slurry is coated on the sodium replenishment layer, and dried to obtain a positive electrode coating with a single-sided areal density of 200 g/m².

Then, the operations of forming the sodium replenishment layer and the positive electrode coating are repeated on the other side of the aluminum foil. The positive electrode sheet is obtained after rolling.

Following the method described in Example 1, the positive electrode sheet in Example 8 is assembled into a sodium ion battery.

### Example 9

Example 9 mainly differs from Example 2 in that in the positive electrode sheet in Example 9, the ratio of sodium replenishment capacities provided by the first sodium replenishment agent and the sacrificial sodium replenishment agent is 90%: 10%.

The positive electrode sheet in Example 9 is prepared as follows.

A base coat slurry having the same composition as that in Example 2 is coated on one side surface of a 13 µm-thick aluminum foil used as a positive electrode current collector, and dried to form a sodium replenishment layer with a single-sided areal density of 15.0 g/m² and a single-sided thickness of 12±1 µm. The sodium replenishment layer is then formed on the back side surface of the aluminum foil.

The sodium positive electrode active material Na₃V₂(PO₄)₃, the sacrificial sodium replenishment agent Na₂CO₃, the binder PVDF, the conductive agent Super-P, the dispersant PVP, and the solvent NMP are mixed at a weight ratio of 100: 0.6: 3: 2: 0.3: 68, to prepare a positive electrode slurry with a solid content 61 wt%. The positive electrode slurry is coated on the sodium replenishment layer, and then dried to form a positive electrode coating with a single-sided areal density of 200 g/m². Then, the positive electrode slurry is coated on the sodium replenishment layer on the back side surface and dried, to obtain a double-sided positive electrode sheet for use.

Following the method described in Example 1, the positive electrode sheet in Example 9 is assembled into a sodium ion battery.

### Example 10

Example 10 mainly differs from Example 2 in that in the positive electrode coating for a positive electrode sheet prepared in Example 10, the total weight of the sacrificial sodium replenishment agent is 1% based on the total weight of the sodium positive electrode active material; and in the positive electrode coating, the ratio of sodium replenishment capacities provided by the first positive electrode sodium replenishment agent and the sacrificial sodium replenishment agent is 83%: 17%.

The positive electrode sheet in Example 10 is prepared as follows.

A base coat slurry having the same composition as that in Example 2 is coated on a surface of a 13 µm-thick aluminum foil used as a positive electrode current collector, and dried to form a sodium replenishment layer with a single-sided areal density of 13.8 g/m² and a single-sided thickness of 11±1 µm. The sodium replenishment layer is then formed on the back side surface of the aluminum foil.

The sodium positive electrode active material Na₃V₂(PO₄)₃, the sacrificial sodium replenishment agent Na₂CO₃, the binder PVDF, the conductive agent Super-P, the dispersant PVP, and the solvent NMP are mixed at a weight ratio of 100: 1: 3: 2: 0.3: 68 and prepared into a positive electrode slurry. The positive electrode slurry is coated on the sodium replenishment layer, and dried to form a positive electrode coating with a single-sided areal density of 200 g/m². Then, the positive electrode slurry is coated on the sodium replenishment layer on the back side surface and dried, to obtain a double-sided positive electrode sheet for use.

Following the method described in Example 1, the positive electrode sheet in Example 10 is assembled into a sodium ion battery.

### Example 11

Example 11 mainly differs from Example 2 in that in the positive electrode sheet in Example 10, the ratio of sodium replenishment capacities provided by the first positive electrode sodium replenishment agent and the sacrificial sodium replenishment agent is 30%: 70%.

The positive electrode sheet in Example 11 is prepared as follows.

A base coat slurry having the same composition as that in Example 2 is coated on a surface of a 13 µm-thick aluminum foil used as a positive electrode current collector, and dried to form a sodium replenishment layer with a single-sided areal density of 5.0 g/m² and a single-sided thickness of 4±1 µm. The sodium replenishment layer is then formed on the back side surface of the aluminum foil.

The sodium positive electrode active material Na₃V₂(PO₄)₃, the sacrificial sodium replenishment agent Na₂CO₃, the binder PVDF, the conductive agent Super-P, the dispersant PVP, and the solvent NMP are mixed at a weight ratio of 100: 4.1: 3: 2: 0.3: 68, and prepared into a positive electrode slurry. The positive electrode slurry is coated on the sodium replenishment layer, and dried to form a positive electrode coating with a single-sided areal density of 200 g/m². Then, the positive electrode slurry is coated on the sodium replenishment layer on the back side surface and dried, to obtain a double-sided positive electrode sheet for use.

Following the method described in Example 1, the positive electrode sheet in Example 11 is assembled into a sodium ion battery.

### Example 12

Example 12 mainly differs from Example 2 in that in the positive electrode coating for a positive electrode sheet prepared in Example 12, the total weight of the sacrificial sodium replenishment agent accounted for 5% based on the total weight of the sodium positive electrode active material. In the positive electrode coating, the ratio of sodium replenishment capacities provided by the first positive electrode sodium replenishment agent and the sacrificial sodium replenishment agent is 16%: 84%.

The positive electrode sheet in Example 12 is prepared as follows.

A base coat slurry having the same composition as that in Example 2 is coated on a surface of a 13 µm-thick aluminum foil used as a positive electrode current collector, and dried to form a sodium replenishment layer with a single-sided areal density of 2.7 g/m² and a single-sided thickness of 2 µm. The sodium replenishment layer is then formed on the back side surface of the aluminum foil.

The sodium positive electrode active material Na₃V₂(PO₄)₃, the sacrificial sodium replenishment agent Na₂CO₃, the binder PVDF, the conductive agent Super-P, the dispersant PVP, and the solvent NMP are mixed at a weight ratio of 100: 5: 3: 2: 0.3: 68, to obtain a positive electrode paste. The positive electrode slurry is coated on the sodium replenishment layer, and dried to form a positive electrode coating with a single-sided areal density of 200 g/m². Then, the positive electrode slurry is coated on the sodium replenishment layer on the back side surface and dried, to obtain a double-sided positive electrode sheet for use.

Following the method described in Example 1, the positive electrode sheet in Example 12 is assembled into a sodium ion battery.

### Example 13

Example 13 mainly differs from Example 2 in that in the positive electrode sheet in Example 11, the ratio of sodium replenishment capacities provided by the first sodium replenishment agent and the sacrificial sodium replenishment agent is 5%: 95%.

The positive electrode sheet in Example 13 is prepared as follows.

A base coat slurry having the same composition as that in Example 2 is coated on a surface of a 13 µm-thick aluminum foil used as a positive electrode current collector, and dried to form a sodium replenishment layer with a single-sided areal density of 0.9 g/m² and a single-sided thickness of 1 µm. The sodium replenishment layer is then formed on the back side surface of the aluminum foil.

The sodium positive electrode active material Na₃V₂(PO₄)₃, the sacrificial sodium replenishment agent Na₂CO₃, the binder PVDF, the conductive agent Super-P, and the dispersant PVP, and the solvent NMP are mixed at a weight ratio of 100: 5.7: 3: 2: 0.3: 68, to obtain a positive electrode paste. The positive electrode slurry is coated on the sodium replenishment layer, and dried to form a positive electrode coating with a single-sided areal density of 200 g/m². Then, the positive electrode slurry is coated on the sodium replenishment layer on the back side surface and dried, to obtain a double-sided positive electrode sheet for use.

Following the method described in Example 1, the positive electrode sheet in Example 13 is assembled into a sodium ion battery.

### Example 14

Example 14 mainly differs from Example 2 in that in the positive electrode coating for a positive electrode sheet prepared in Example 14, the total weight of the sacrificial sodium replenishment agent is 10% based on the total weight of the sodium positive electrode active material. In the positive electrode coating, the ratio of sodium replenishment capacities provided by the first positive electrode sodium replenishment agent and the sacrificial sodium replenishment agent is 3.5%: 96.5%.

The positive electrode sheet is prepared as follows.

A base coat slurry having the same composition as that in Example 2 is coated on a surface of a 13 µm-thick aluminum foil used as a positive electrode current collector, and dried to form a sodium replenishment layer with a single-sided areal density of 1.0 g/m² and a single-sided thickness of 1 µm. The sodium replenishment layer is then formed on the back side surface of the aluminum foil.

The sodium positive electrode active materialNa₃V₂(PO₄)₃, the sacrificial sodium replenishment agent Na₂CO₃, the binder PVDF, the conductive agent Super-P, the dispersant PVP, and the solvent NMP are mixed at a weight ratio of 100: 10: 3: 2: 0.3: 68, and prepared into a positive electrode slurry. The positive electrode slurry is coated on the sodium replenishment layer, and dried to obtain a positive electrode coating with a single-sided areal density of 200 g/m². Then, the positive electrode slurry is coated on the sodium replenishment layer on the back side surface and dried, to obtain a double-sided positive electrode sheet for use.

Following the method described in Example 1, the positive electrode sheet in Example 14 is assembled into a sodium ion battery.

### Example 15

Example 15 mainly differs from Example 2 in that in the positive electrode sheet in Example 15, the ratio of sodium replenishment capacities provided by the first sodium replenishment agent and the sacrificial sodium replenishment agent is 95%: 5%.

The positive electrode sheet in Example 15 is prepared as follows.

A base coat slurry having the same composition as that in Example 2 is coated on a surface of a 13 µm-thick aluminum foil used as a positive electrode current collector, and dried to form a sodium replenishment layer with a single-sided areal density of 16.0 g/m² and a single-sided thickness of 13±1 µm. Then, the sodium replenishment layer is formed on the back side surface of the aluminum foil.

The sodium positive electrode active material Na₃V₂(PO₄)₃, the sacrificial sodium replenishment agent Na₂CO₃, the binder PVDF, the conductive agent Super-P, the dispersant PVP, and the solvent NMP are mixed at a weight ratio of 100: 0.3: 3: 2: 0.3: 68, to obtain a positive electrode slurry. The positive electrode slurry is coated on the sodium replenishment layer, and dried to obtain a positive electrode coating with a single-sided areal density of 200 g/m². Then, the positive electrode slurry is coated on the sodium replenishment layer on the back side surface and dried, to obtain a double-sided positive electrode sheet for use.

Following the method described in Example 1, the positive electrode sheet in Example 15 is assembled into a sodium ion battery.

### Example 16

Example 16 mainly differs from Example 2 in that in the positive electrode coating for a positive electrode sheet prepared in Example 16, the total weight of the sacrificial sodium replenishment agent is 0.2% based on the total weight of the sodium positive electrode active material. In the positive electrode coating, the ratio of sodium replenishment capacities provided by the first positive electrode sodium replenishment agent and the sacrificial sodium replenishment agent is 96.6%: 3.4%.

The positive electrode sheet is prepared as follows. A base coat slurry having the same composition as that in Example 2 is coated on a surface of a 13 µm-thick aluminum foil used as a positive electrode current collector, and dried to form a sodium replenishment layer with a single-sided areal density of 16.0 g/m² and a single-sided thickness of 13±1 µm. The sodium replenishment layer is then formed on the back side surface of the aluminum foil.

The sodium positive electrode active material Na₃V₂(PO₄)₃, the sacrificial sodium replenishment agent Na₂CO₃, the binder PVDF, the conductive agent Super-P, the dispersant PVP, and the solvent NMP are mixed at a weight ratio of 100: 0.2: 3: 2: 0.3: 68, and prepared into a positive electrode slurry. The positive electrode slurry is coated on the sodium replenishment layer, and dried to obtain a positive electrode coating with a single-sided areal density of 200 g/m². Then, the positive electrode slurry is coated on the sodium replenishment layer on the back side surface and dried, to obtain a double-sided positive electrode sheet for use.

Following the method described in Example 1, the positive electrode sheet in Example 16 is assembled into a sodium ion battery.

### Example 17

The positive electrode sheet in Example 17 mainly differs from that in Example 1 in that the difference between proportions by weight of the sacrificial positive electrode sodium replenishment agent to the total weight of the sacrificial positive electrode sodium replenishment agent in the upper and lower positive electrode sub-coatings is 50%.

In the preparation of the positive electrode sheet in Example 17, the positive electrode slurry for the lower coating close to the sodium replenishment layer has a composition of: Na₃V₂(PO₄)₃: Na₂CO₃: PVDF: Super-P: PVP: NMP =100: 1: 3: 2: 0.3: 68. The positive electrode slurry for an upper coating away from the sodium replenishment layer has a composition of: Na₃V₂(PO₄)₃: Na₂CO₃: PVDF: Super-P: PVP: NMP =100: 3: 3: 2: 0.3: 70. Additionally, in the positive electrode sheet in Example 17, the positive electrode coating has a single-sided areal density of 300 g/m²; and the ratio of sodium replenishment capacities provided by the first positive electrode sodium replenishment agent and the sacrificial sodium replenishment agent is 50%: 50%.

Following the method described in Example 1, the positive electrode sheet in Example 17 is assembled into a sodium ion battery.

### Example 18

The positive electrode sheet in Example 18 mainly differs from that in Example 1 in that the first positive electrode sub-coating close to the current collector has no sacrificial positive electrode sodium replenishment agent; and the second positive electrode sub-coating away from the current collector has the sodium positive electrode active material and the sacrificial positive electrode sodium replenishment agent.

The positive electrode sheet in Example 18 is prepared as follows.
(1) A base coat slurry having the same composition as that in Example 1 is coated on a surface of a 13 µm-thick aluminum foil used as a positive electrode current collector, and dried to form a sodium replenishment layer with a single-sided areal density of 8.4 g/m² and a single-sided thickness of 7±1 µm. The sodium replenishment layer is then formed on the back side surface of the aluminum foil.
(2) A positive electrode coating having two sub-coatings is formed on the sodium replenishment layer. The slurry for the first positive electrode sub-coating close to the sodium replenishment layer has a composition of: Na₃V₂(PO₄)₃: PVDF: Super-P: PVP: NMP =100: 3: 2: 0.3: 68. The slurry for the second positive electrode sub-coating away from the sodium replenishment layer has a composition of: Na₃V₂(PO₄)₃: Na₂CO₃: PVDF: Super-P: PVP: NMP =100: 6.3: 3: 2: 0.3: 70.
(3) The positive electrode coating is formed on the sodium replenishment layer on the back side surface, to obtain a double-sided positive electrode sheet for use. In the positive electrode sheet in Example 18, the positive electrode coating has a single-sided areal density of 200 g/m²; and the ratio of sodium replenishment capacities provided by the first positive electrode sodium replenishment agent and the sacrificial sodium replenishment agent is 50%: 50%.

Following the method described in Example 1, the positive electrode sheet in Example 18 is assembled into a sodium ion battery.

### Example 19

The positive electrode sheet in Example 19 mainly differs from that in Example 2 in that in the positive electrode coating, the sodium positive electrode active material Na₃V₂(PO₄)₃ is replaced by Na[Ni_{0.25}Fe_{0.5}Mn_{0.25}]O₂.

Following the method described in Example 1, the positive electrode sheet in Example 19 is assembled into a sodium ion battery.

To highlight the beneficial effects of the present disclosure, the following Comparative Examples 1-4 are provided in the present disclosure.

### Comparative Example 1

A non-sodium replenishment positive electrode sheet is prepared as follows. Na₃V₂(PO₄)₃, PVDF, Super-P, PVP, and NMP are mixed at a weight ratio of 100: 3: 2: 0.3: 69, and prepared into a positive electrode coating slurry. The slurry is directly coated on an aluminum foil, and dried to form a positive electrode coating with a single-sided areal density of 200 g/m². Then, the positive electrode coating slurry is coated on the other side of the aluminum foil and dried. A double-sided positive electrode sheet is obtained.

Following the method described in Example 1, the positive electrode sheet in Comparative Example 1 is assembled into a sodium ion battery.

### Comparative Example 2

A positive electrode sheet is different from the method in Example 2 in that a hybrid layer containing the first positive electrode sodium replenishment agent and the sodium positive electrode active material is directly arranged on the aluminum foil.

The positive electrode sheet in Comparative Example 2 is prepared as follows. Na₃V₂(PO₄)₃, The first positive electrode sodium replenishment agent (the same as that in Example 2, Na₅FeO₄ with a carbon coating layer on the surface), PVDF, Super-P, PVP, and NMP are mixed at a weight ratio of 100: 3: 3: 2: 0.3: 69, and prepared into a positive electrode coating slurry. The positive electrode slurry is directly coated on an aluminum foil, under control to give a single-sided areal density of 200 g/m² after coating; and dried to form a positive electrode coating. Then, the positive electrode coating slurry is coated on the other side of the aluminum foil and dried. A double-sided positive electrode sheet is obtained.

Following the method described in Example 1, the positive electrode sheet in Comparative Example 2 is assembled into a sodium ion battery.

### Comparative Example 3

A positive electrode sheet differs from that in Example 2 in that a hybrid layer containing the sacrificial sodium replenishment agent and the sodium positive electrode active material is arranged on the aluminum foil.

The positive electrode sheet is prepared as follows. Na₃V₂(PO₄)₃, the sacrificial sodium replenishment agent Na₂CO₃, PVDF, Super-P, PVP, and NMP are mixed at a weight ratio of 100: 3: 3: 2: 0.3: 69, and prepared into a positive electrode coating slurry. The slurry is directly coated on an aluminum foil, and dried to form a positive electrode coating with a single-sided areal density of 200 g/m². Then, the positive electrode coating slurry is coated on the other side of the aluminum foil and dried. A double-sided positive electrode sheet is obtained.

Following the method described in Example 1, the positive electrode sheet in Comparative Example 3 is assembled into a sodium ion battery.

### Comparative Example 4

A positive electrode sheet mainly differs from that in Example 2 in that a hybrid layer containing the first positive electrode sodium replenishment agent, the sacrificial sodium replenishment agent and the sodium positive electrode active material is directly arranged on the aluminum foil.

The positive electrode sheet in Comparative Example 4 is prepared as follows. Na₃V₂(PO₄)₃, Na₅FeO₄, Na₂CO₃, PVDF, Super-P, PVP, and NMP are mixed at a weight ratio of 100: 3: 3: 3: 2: 0.3: 69, and prepared into a positive electrode coating slurry. The positive electrode slurry is directly coated on the aluminum foil, and dried to form a positive electrode coating with a single-sided areal density of 200 g/m². Then, the positive electrode coating slurry is coated on the other side of the aluminum foil and dried. A double-sided positive electrode sheet is obtained.

Following the method described in Example 1, the positive electrode sheet in Comparative Example 4 is assembled into a sodium ion battery.

### Comparative Example 5

A positive electrode sheet differs from that in Example 2 in that a sodium replenishment layer containing the first positive electrode sodium replenishment agent was arranged on the aluminum foil, and a positive electrode coating containing no sacrificial sodium replenishment agent is arranged on the sodium replenishment layer.

The positive electrode sheet is prepared through a process having the following difference from that in Example 2. The sodium replenishment layer is coated with a positive electrode coating slurry prepared by mixing Na₃V₂(PO₄)₃, PVDF, Super-P, PVP, and NMP at a weight ratio of 100: 3: 2: 0.3: 69, and the rest steps are the same as those in Example 1.

Following the method described in Example 1, the positive electrode sheet in Comparative Example 5 is assembled into a sodium ion battery.

### Comparative Example 6

A positive electrode sheet differs from that in Example 2 in that the positions of the positive electrode coating and the sodium replenishment layer are inverted in Example 2. That is, in Example 2, the positive electrode coating containing the sacrificial sodium replenishment agent is in direct contact with the aluminum foil, and the sodium replenishment layer containing the first positive electrode sodium replenishment agent (the sodium replenishment layer has the same composition as that of the sodium replenishment layer in Example 2) is arranged on the positive electrode coating.

Following the method described in Example 1, the positive electrode in Comparative Example 6 is assembled into a sodium ion battery.

### Comparative Example 7

The positive electrode sheet is prepared through a process having the following difference from that in Comparative Example 1. The sodium positive electrode active material Na₃V₂(PO₄)₃ is replaced by Na[Ni_{0.25}Fe_{0.5}Mn_{0.25}]O₂.

The positive electrode is prepared as follows. The sodium positive electrode active material Na[Ni_{0.25}Fe_{0.5}Mn_{0.25}]O₂, PVDF, Super-P, PVP, and NMP are mixed at a weight ratio of 100: 3: 2: 0.3: 68, and prepared into a positive electrode coating slurry. The slurry is directly coated on an aluminum foil, and dried to form a positive electrode coating with a single-sided areal density of 200 g/m². Then, the positive electrode coating slurry is coated on the other side of the aluminum foil and dried. A double-sided positive electrode sheet is obtained.

Following the method described in Example 1, the positive electrode sheet in Comparative Example 7 is assembled into a sodium ion battery.

To provide powerful support for the effect brought about by the technical solutions in the present disclosure, the following performance tests are conducted on the sodium ion batteries of the above examples or comparative examples:
a. Test of capacity per gram of positive electrode: At normal temperature (25±3°C), each sodium ion battery is charged to an upper-limit voltage of 4.3V (C is the battery capacity) at a constant current of 1/3C and then charged to a lower-limit current of 0.05C at a constant voltage of 4.3V. This process is used for formation. The first charge capacity (that is, the charge capacity at the time of formation) is recorded. Then the battery is discharged at 1/3C for the first time to a lower-limit voltage of 2.0V. The first discharge capacity (in mAh) and the mean discharge voltage are recorded. Capacity per gram of positive electrode = first discharge capacity/total weight of positive electrode active material. Volumetric energy density of battery = first discharge capacity x mean discharge voltage/battery volume.
b. Cycle performance test: At normal temperature (25+/-3°C), each sodium ion battery after formation is charged to an upper-limit voltage of 3.8V at a constant current of 1/3C, and then charged to a lower-limit current of 0.05C at a constant voltage of 3.8V, then discharged at 1/3C to a lower-limit voltage of 2.0V. The charge and discharge steps are repeated 500 times. The capacity retention rate after 500 cycles is recorded. Capacity retention rate after 500 cycles = discharge capacity of the 500th cycles/first discharge capacity after formation.
c. Test of DC internal resistance (DCIR) of battery: At normal temperature (25+/- 3°C), each sodium ion battery after formation is constant-current charged to an upper-limit voltage of 3.8V at 1/3C, and then discharged at 1/3C to a lower-limit voltage of 2.0V. After 3 cycles, the battery is constant-current charged to 50% SOC at 1/3C at normal temperature. After standing for 1 hr, the battery voltage is recorded as V₁. Then the battery is discharged at 1.5C for 30s, and the battery voltage after discharge is recorded as V₂. DCIR=(V₁-V₂)/1.5C.
d. Test of utilization rate of sodium replenishment material:

Non-sodium replenishment batteries corresponding to various sodium replenishment batteries in the examples and some comparative examples of the present disclosure are prepared (Examples 1 to 19 and Comparative Examples 2 to 7 are sodium replenishment batteries, Comparative Example 1 is non-sodium replenishment battery corresponding to Examples 1 to 18 and Comparative Examples 2 to 6, and Comparative Example 7 is non-sodium replenishment battery corresponding to Example 19).

At normal temperature (25+/-3°C), each battery is charged to an upper-limit voltage of 4.3V at a constant current of 1/3C and then charged to a lower-limit current of 0.05C at a constant voltage of 4.3V. This process is used for formation, and then discharged at 1/3C to a lower-limit voltage of 2.0V. The discharge capacity of each sodium replenishment battery is recorded as C₁, the discharge capacity of the non-sodium replenishment battery corresponding to each sodium replenishment battery is recorded as C₂, and the utilization rate of sodium replenishment material = (C₁-C₂)/(weight of each sodium replenishment material x the capacity per gram of corresponding sodium replenishment material). Here, the capacity per gram of each sodium replenishment material is calculated according to the number of active sodium ions actually desodiated during sodium replenishment with each sodium replenishment agent known in the art.

The relevant test results are summarized in Table 1 below.

**Table 1**

| | Capacity of per gram of cathode (mAh/g) | DCIR (mΩ) | Utilization rate of sodium replenishment material (%) | Mean discharge voltage (V) | Volumetric energy density (Wh/L) | Capacity retention rate after 500 cycles (%) |
|---|---|---|---|---|---|---|
| Example 1 | 106.4 | 102.5 | 95.4 | 3.2 | 340.5 | 93.1 |
| Example 2 | 105.9 | 103.1 | 94.8 | 3.2 | 338.9 | 92.8 |
| Example 3 | 106.2 | 102.7 | 95.0 | 3.2 | 339.8 | 93.0 |
| Example 4 | 105.7 | 103.2 | 94.4 | 3.2 | 338.2 | 92.6 |
| Example 5 | 105.7 | 103.2 | 95.1 | 3.2 | 338.2 | 92.4 |
| Example 6 | 101.4 | 108.6 | 90.1 | 3.19 | 323.5 | 92.0 |
| Example 7 | 105.7 | 102.9 | 94.9 | 3.2 | 338.2 | 93.2 |
| Example 8 | 105.2 | 104.1 | 94.2 | 3.2 | 336.6 | 92.7 |
| Example 9 | 103.1 | 106.1 | 90.3 | 3.2 | 329.9 | 92.4 |
| Example 10 | 104.4 | 103.6 | 94.0 | 3.2 | 334.1 | 92.5 |
| Example 11 | 103.4 | 109.8 | 90.5 | 3.2 | 330.9 | 93.0 |
| Example 12 | 103.7 | 106.4 | 91.1 | 3.2 | 331.8 | 93.2 |
| Example 13 | 101.0 | 112.5 | 88.2 | 3.19 | 322.2 | 92.0 |
| Example 14 | 100.4 | 112.4 | 87.7 | 3.2 | 321.3 | 92.2 |
| Example 15 | 100.4 | 113.4 | 85.2 | 3.19 | 320.3 | 92.1 |
| Example 16 | 100.2 | 114.4 | 84.4 | 3.2 | 320.6 | 92.0 |
| Example 17 | 104.0 | 103.8 | 94.0 | 3.2 | 332.8 | 92.4 |
| Example 18 | 104.2 | 110.3 | 94.0 | 3.2 | 333.4 | 92.8 |
| Example 19 | 120.4 | 101.3 | 93.2 | 3.02 | 363.6 | 92.7 |
| Comparative Example 1 | 88.4 | 135.7 | / | 3.2 | 282.9 | 91.5 |
| Comparative Example 2 | 95.8 | 120.4 | 70.4 | 3.19 | 305.6 | 91.7 |
| Comparative Example 3 | 95.9 | 130.6 | 72.1 | 3.2 | 306.9 | 91.9 |
| Comparative Example 4 | 98.2 | 117.0 | 75.4 | 3.2 | 314.2 | 92.0 |
| Comparative Example 5 | 96.2 | 116.5 | 72.6 | 3.2 | 307.8 | 91.9 |
| Comparative Example 6 | 95.5 | 127.1 | 68.2 | 3.18 | 303.7 | 91.4 |
| Comparative Example 7 | 107.5 | 130.2 | / | 3.0 | 322.5 | 91.4 |

It can be known from comparison of Example 2 and Comparative Examples 1 to 6 in Table 1 that when the positive electrode of the battery does not contain the sodium replenishment agent (Comparative Example 1), the positive electrode of the battery has a low capacity per gram, low volumetric energy density, and high DCIR value. In Comparative Examples 4 and 6 where the positive electrode only comprises one type of positive electrode sodium replenishment agent (such as Comparative Examples 2, 3, and 5), or the positive electrode comprises two types of positive electrode sodium replenishment agents, but which are not distributed as described in Example 1 of the present disclosure (the sum of sodium replenishment capacity provided by the sodium replenishment agent in the positive electrode sheet in Comparative Examples 2 to 6 is close to that in Example 2), although compared with Comparative Example 1, the capacity per gram of the positive electrode and the volumetric energy density of the battery are improved to some extent, the effect of reducing the DCIR value of the battery is not obvious, the DCIR value of the battery is still high (which may reflect the poor power performance of the battery), and the utilization rate of the sodium replenishment agent is not high. In Example 2 of the present disclosure, both the first positive electrode sodium replenishment agent (that is, the sodium-rich transition metal oxide) and the sacrificial sodium replenishment agent are used in the positive electrode of the sodium ion battery, and arranged in a pattern as required in the present disclosure. By means of these measures, the utilization rate of the two types of sodium replenishment agents can be obviously improved, the DCIR value of the battery is reduced, and the capacity per gram of the positive electrode and the volumetric energy density of the battery are improved. The only difference from Example 2 is that Example 1 with two layers of positive electrode coatings has a similar effect, and the effect is better than that in Example 1. A similar effect can also be known from the comparison between Comparative Example 7 and Example 19. The sodium replenishment ion batteries provided in other examples of the present disclosure also has the advantages of high utilization rate of the sodium replenishment material, low DCIR value of the battery, high capacity per gram of the positive electrode of the battery, high volumetric energy density of the battery, and good cycle performance and so on.

In addition, as can be seen from the comparison of Examples 2 and 8 to 16, when the sodium replenishment capacity provided by the first positive electrode sodium replenishment agent accounts for 10 to 90%, the sodium ion battery has better comprehensive performance, the DCIR value of the battery is low, the utilization rate of the sodium replenishment material is high, and the positive electrode has a high capacity per gram. When the sodium replenishment capacity provided by the first positive electrode sodium replenishment agent accounts for 50 to 90%, the sodium ion battery has more preferred comprehensive performance. Additionally, in the positive electrode coating, when the weight ratio of the sacrificial positive electrode sodium replenishment agent to the sodium positive electrode active material is greater than 0.3% (for example, in the range of 0.5 to 10%), the utilization rate of the sodium replenishment material is improved, and the capacity per gram of the positive electrode is improved. When the weight ratio ranges from 1% to 5%, the comprehensive performance of the battery is more preferred.

In addition, from the comparison between Example 2 and Example 6, it can be known that when other parameters of the positive electrode of the battery are the same, the capacity per gram of the positive electrode of the battery and the utilization rate of the sodium replenishment material are improved if the first positive electrode sodium replenishment agent has a carbon coating layer on the surface.

The above embodiments are only several implementations of the present application, and are described in detail, but which cannot be understood as a limitation on the scope of the present disclosure. It will be understood that for a person of ordinary skill in the art, several variations and improvements can be made by those of ordinary skill in the art without departing from the idea of the present disclosure, which are all contemplated in the protection scope of the present disclosure. Therefore, the protection scope of this application shall be defined by the appended claims.

## Claims

1. A positive electrode sheet for a sodium ion battery, the positive electrode sheet comprising a positive electrode current collector and a sodium replenishment layer and a positive electrode coating laminated on at least a side of the positive electrode current collector, wherein on the same side of the positive electrode current collector, the positive electrode coating is arranged on a side of the sodium replenishment layer away from the positive electrode current collector; the sodium replenishment layer comprises a sodium-rich transition metal oxide; and the positive electrode coating comprises a sodium positive electrode active material and a sacrificial positive electrode sodium replenishment agent that is decomposable to produce a gas.

2. The positive electrode sheet according to claim 1, wherein the positive electrode coating comprises n positive electrode sub-coatings, and n is ≥2, wherein in a direction from the positive electrode current collector towards the sodium replenishment layer, a weight ratio of the sacrificial positive electrode sodium replenishment agent to the sodium positive electrode active material in each positive electrode sub-coating shows an increasing trend; and
optionally, in the direction from the positive electrode current collector towards the sodium replenishment layer, the weight ratio of the sacrificial positive electrode sodium replenishment agent to the sodium positive electrode active material in each positive electrode sub-coating increase sequentially layer by layer.

3. The positive electrode sheet according to claim 2, wherein among the n positive electrode sub-coatings, at least two adjacent layers meet: Aₘ/(Dₘ/Dₘ₋₁)-Aₘ₋₁≥5%, wherein Aₘ₋₁ is a proportion by weight of the sacrificial positive electrode sodium replenishment agent in an (m-1)th positive electrode sub-coating relative to a total weight of the sacrificial positive electrode sodium replenishment agent in the positive electrode coating, Aₘ is a proportion by weight of the sacrificial positive electrode sodium replenishment agent in an mth positive electrode sub-coating relative to the total weight of the sacrificial positive electrode sodium replenishment agent in the positive electrode coating, Dₘ₋₁ is a thickness of the (m-1)th positive electrode sub-coating, Dₘ is a thickness of the mth positive electrode sub-coating, and m is any integer selected from 2 to n; on the same side of the positive electrode current collector, the (m-1)th positive electrode sub-coating is closer to the positive electrode current collector than the mth positive electrode sub-coating; and
optionally, among the n positive electrode sub-coatings, any two adjacent positive electrode sub-coatings meet: Aₘ/(Dₘ/Dₘ₋₁)-Aₘ₋₁≥5%.

4. The positive electrode sheet according to claim 2 or 3, wherein in each positive electrode sub-coating, a proportion by weight of the sodium positive electrode active material is 80% or higher.

5. The positive electrode sheet according to any one of claims 1 to 4, wherein in the positive electrode coating, the total weight of the sacrificial positive electrode sodium replenishment agent accounts for 0.5% to 10% based on the total weight of the sodium positive electrode active material.

6. The positive electrode sheet according to any one of claims 1 to 5, wherein the sodium replenishment layer comprises the following components in percentage by weight: 50% to 90% of the sodium-rich transition metal oxide, 0 to 40% of a second sodium positive electrode active material, 0.5% to 10% of a binder, and 0.5% to 10% of an electrically conductive agent.

7. The positive electrode sheet according to any one of claims 1 to 6, wherein a proportion of the sodium replenishment capacity provided by the sodium-rich transition metal oxide relative to a total sodium replenishment capacity provided by the sodium-rich transition metal oxide and the sacrificial positive electrode sodium replenishment agent ranges from 10% to 90%; and
optionally, the proportion of the sodium replenishment capacity provided by the sodium-rich transition metal oxide relative to the total sodium replenishment capacity provided by the sodium-rich transition metal oxide and the sacrificial positive electrode sodium replenishment agent ranges from 50% to 90%.

8. The positive electrode sheet according to any one of claims 1 to 7, wherein a single-sided areal density of the positive electrode coating is larger than a single-sided areal density of the sodium replenishment layer.

9. The positive electrode sheet according to claim 8, wherein the single-sided areal density of the sodium replenishment layer ranges from 1 g/m² to 20 g/m²; and the single-sided areal density of the positive electrode coating ranges from 50 g/m² to 500 g/m².

10. The positive electrode sheet according to any one of claims 1 to 9, wherein the sodium-rich transition metal oxide has a chemical formula of NaₓMO_{y}, wherein M comprises one or more of Ni, Co, Fe, Mn, Cr, Cu, Mo, Ru, Ir, Sn, and Nb; x ranges from 1 to 6, and y ranges from 1 to 4; and
optionally, the sodium-rich transition metal oxide comprises one or more of Na₂FeO₂, Na₃FeO₃, Na₃FeO₄, Na₅FeO₄, Na₂NiO₂, Na₂CuO₂, Na₆MnO₄, and Na₆CoO₄.

11. The positive electrode sheet according to any one of claims 1 to 10, wherein the sodium-rich transition metal oxide further has an electrically conductive coating layer on the surface.

12. The positive electrode sheet according to any one of claims 1 to 11, wherein the sacrificial positive electrode sodium replenishment agent is one or more selected from sodium azide, sodium amide, sodium phosphide, sodium sulfide, sodium peroxide, sodium carbonate, sodium oxalate, sodium squarate, and sodium nitrite.

13. The positive electrode sheet according to any one of claims 1 to 12, wherein the sodium replenishment layer is in direct contact with the positive electrode current collector, and/or the positive electrode coating is in direct contact with the sodium replenishment layer.

14. A sodium ion battery, comprising a positive electrode sheet according to any one of claims 1 to 13.

15. A device comprising a sodium ion battery according to claim 14, the device comprising an electric apparatus or an energy storage system.

## Patentansprüche

1. Folie für positive Elektrode für eine Natriumionenbatterie, wobei die Folie für positive Elektrode einen Stromkollektor für positive Elektrode und eine Natriumergänzungsschicht sowie eine Beschichtung für positive Elektrode umfasst, die auf mindestens einer Seite des Stromkollektors für positive Elektrode laminiert sind, wobei auf derselben Seite des Stromkollektors für positive Elektrode die Beschichtung für positive Elektrode auf einer von dem Stromkollektor für positive Elektrode abgewandten Seite der Natriumergänzungsschicht eingerichtet ist; wobei die Natriumergänzungsschicht ein natriumreiches Übergangsmetalloxid umfasst; und wobei die Beschichtung für positive Elektrode ein Natriumaktivmaterial für positive Elektrode und ein Opfernatriumergänzungsmittel für positive Elektrode umfasst, das zersetzbar ist, um ein Gas zu erzeugen.

2. Folie für positive Elektrode nach Anspruch 1, wobei die Beschichtung für positive Elektrode n Unterbeschichtungen für positive Elektrode umfasst und n ≥2 ist, wobei in einer Richtung von dem Stromkollektor für positive Elektrode in Richtung der Natriumergänzungsschicht ein Gewichtsverhältnis des Opfernatriumergänzungsmittels für positive Elektrode zu dem Natriumaktivmaterial für positive Elektrode in jeder Unterbeschichtung für positive Elektrode einen zunehmenden Trend zeigt; und
optional in der Richtung von dem Stromkollektor für positive Elektrode in Richtung der Natriumergänzungsschicht das Gewichtsverhältnis des Opfernatriumergänzungsmittels für positive Elektrode zu dem Natriumaktivmaterial für positive Elektrode in jeder Unterbeschichtung für positive Elektrode sequenziell schichtweise zunimmt.

3. Folie für positive Elektrode nach Anspruch 2, wobei unter den Unterbeschichtungen für positive Elektrode mindestens zwei angrenzende Schichten Folgendes erfüllen: Aₘ/(Dₘ/Dₘ₋₁)-Aₘ₋₁≥5 %, wobei Aₘ₋₁ ein Gewichtsanteil des Opfernatriumergänzungsmittels für positive Elektrode in einer (m-1)-ten Unterbeschichtung für positive Elektrode in Bezug auf ein Gesamtgewicht des Opfernatriumergänzungsmittels für positive Elektrode in der Beschichtung für positive Elektrode ist, Aₘ ein Gewichtsanteil des Opfernatriumergänzungsmittels für positive Elektrode in einer m-ten Unterbeschichtung für positive Elektrode in Bezug auf das Gesamtgewicht des Opfernatriumergänzungsmittels für positive Elektrode in der Beschichtung für positive Elektrode ist, Dₘ₋₁ eine Dicke der (m-1)-ten Unterbeschichtung für positive Elektrode ist, Dₘ eine Dicke der m-ten Unterbeschichtung für positive Elektrode ist, und m eine Ganzzahl ausgewählt aus 2 bis n ist; auf derselben Seite des Stromkollektors für positive Elektrode die (m-1)-te Unterbeschichtung für positive Elektrode näher an dem Stromkollektor für positive Elektrode liegt als die m-te Unterbeschichtung für positive Elektrode; und
optional unter den Unterbeschichtungen für positive Elektrode beliebige zwei angrenzende Unterbeschichtungen für positive Elektrode Folgendes erfüllen: Aₘ/(Dₘ/Dₘ₋₁)-Aₘ₋₁≥5 %.

4. Folie für positive Elektrode nach Anspruch 2 oder 3, wobei in jeder Unterbeschichtung für positive Elektrode ein Gewichtsanteil des Natriumaktivmaterials für positive Elektrode 80 % oder darüber beträgt.

5. Folie für positive Elektrode nach einem der Ansprüche 1 bis 4, wobei in der Beschichtung für positive Elektrode das Gesamtgewicht des Opfernatriumergänzungsmittels für positive Elektrode 0,5 % bis 10 % bezogen auf das Gesamtgewicht des Natriumaktivmaterials für positive Elektrode ausmacht.

6. Folie für positive Elektrode nach einem der Ansprüche 1 bis 5, wobei die Natriumergänzungsschicht die folgenden Komponenten in Gewichtsprozent umfasst: 50 % bis 90 % des natriumreichen Übergangsmetalloxids, 0 bis 40 % eines zweiten Natriumaktivmaterial für positive Elektrode, 0,5 % bis 10 % eines Bindemittels und 0,5 % bis 10 % eines elektrisch leitfähigen Mittels.

7. Folie für positive Elektrode nach einem der Ansprüche 1 bis 6, wobei ein Anteil der Natriumergänzungskapazität, die von dem natriumreichen Übergangsmetalloxid in Bezug auf eine Gesamt-Natriumergänzungskapazität, die von dem natriumreichen Übergangsmetalloxid bereitgestellt wird, und dem Opfernatriumergänzungsmittel für positive Elektrode 10 % bis 90 % beträgt; und
wobei optional der Anteil der Natriumergänzungskapazität, die von dem natriumreichen Übergangsmetalloxid in Bezug auf die Gesamt-Natriumergänzungskapazität, die von dem natriumreichen Übergangsmetalloxid bereitgestellt wird, und dem Opfernatriumergänzungsmittel für positive Elektrode 50 % bis 90 % beträgt.

8. Folie für positive Elektrode nach einem der Ansprüche 1 bis 7, wobei eine einseitige Flächendichte der Beschichtung für positive Elektrode größer ist als eine einseitige Flächendichte der Natriumergänzungsschicht.

9. Folie für positive Elektrode nach Anspruch 8, wobei die einseitige Flächendichte der Natriumergänzungsschicht 1 g/m² bis 20 g/m² beträgt; und die einseitige Flächendichte der Beschichtung für positive Elektrode 50 g/m² bis 500 g/m² beträgt.

10. Folie für positive Elektrode nach einem der Ansprüche 1 bis 9, wobei das natriumreiche Übergangsmetalloxid eine chemische Formel NaₓMO_{y} aufweist, wobei M eines oder mehr aus Ni, Co, Fe, Mn, Cr, Cu, Mo, Ru, Ir, Sn, und Nb umfasst; x 1 bis 6 beträgt, und y 1 bis 4 beträgt; und
wobei optional das natriumreiche Übergangsmetalloxid eines oder mehr aus Na₂FeO₂, Na₃FeO₃, Na₃FeO₄, Na₃FeO₄, Na₂NiO₂, Na₂CuO₂, Na₆MnO₄ und Na₆CoO₄ umfasst.

11. Folie für positive Elektrode nach einem der Ansprüche 1 bis 10, wobei das natriumreiche Übergangsmetalloxid ferner eine elektrisch leitfähige Beschichtungsschicht auf der Oberfläche aufweist.

12. Folie für positive Elektrode nach einem der Ansprüche 1 bis 11, wobei das Opfernatriumergänzungsmittel für positive Elektrode eines oder mehr ausgewählt aus Natriumazid, Natriumamid, Natriumphosphid, Natriumsulfid, Natriumperoxid, Natriumcarbonat, Natriumoxalat, Natriumsquarat und Natriumnitrit ist.

13. Folie für positive Elektrode nach einem der Ansprüche 1 bis 12, wobei die Natriumergänzungsschicht mit dem Stromkollektor für positive Elektrode in direktem Kontakt steht, und/oder die Beschichtung für positive Elektrode mit der Natriumergänzungsschicht in direktem Kontakt steht.

14. Natriumionenbatterie, die eine Folie für positive Elektrode nach einem der Ansprüche 1 bis 13 umfasst.

15. Vorrichtung, die eine Natriumionenbatterie nach Anspruch 14 umfasst, wobei die Vorrichtung eine elektrische Einrichtung oder ein Energiespeichersystem umfasst.

## Revendications

1. Feuille d'électrode positive pour une batterie sodium-ion, la feuille d'électrode positive comprenant un collecteur de courant d'électrode positive et une couche de réapprovisionnement en sodium et un revêtement d'électrode positive stratifiés sur au moins un côté du collecteur de courant d'électrode positive, dans laquelle, sur le même côté du collecteur de courant d'électrode positive, le revêtement d'électrode positive est agencé sur un côté de la couche de réapprovisionnement en sodium éloigné du collecteur de courant d'électrode positive ; la couche de réapprovisionnement en sodium comprend un oxyde de métal de transition riche en sodium ; et le revêtement d'électrode positive comprend un matériau actif d'électrode positive au sodium et un agent de réapprovisionnement en sodium d'électrode positive sacrificiel qui peut se décomposer pour produire un gaz.

2. Feuille d'électrode positive selon la revendication 1, dans laquelle le revêtement d'électrode positive comprend n sous-revêtements d'électrode positive, et n est ≥2, dans laquelle, dans une direction depuis le collecteur de courant d'électrode positive vers la couche de réapprovisionnement en sodium, un rapport pondéral de l'agent de réapprovisionnement en sodium d'électrode positive sacrificiel au matériau actif d'électrode positive au sodium dans chaque sous-revêtement d'électrode positive présente une tendance croissante ; et
éventuellement, dans la direction depuis le collecteur de courant d'électrode positive vers la couche de réapprovisionnement en sodium, le rapport pondéral de l'agent de réapprovisionnement en sodium d'électrode positive sacrificiel au matériau actif d'électrode positive au sodium dans chaque sous-revêtement d'électrode positive augmente de manière séquentielle couche par couche.

3. Feuille d'électrode positive selon la revendication 2, dans laquelle, parmi les n sous-revêtements d'électrode positive, au moins deux couches adjacentes satisfont à : Aₘ/(Dₘ/Dₘ₋₁)-Aₘ₋₁≥5%, où Aₘ₋₁ est une proportion en poids de l'agent de réapprovisionnement en sodium d'électrode positive sacrificiel dans un (m-1)ième sous-revêtement d'électrode positive par rapport à un poids total de l'agent de réapprovisionnement en sodium d'électrode positive sacrificiel dans le revêtement d'électrode positive, Aₘ est une proportion en poids de l'agent de réapprovisionnement en sodium d'électrode positive sacrificiel dans un mième sous-revêtement d'électrode positive par rapport au poids total de l'agent de réapprovisionnement en sodium d'électrode positive sacrificiel dans le revêtement d'électrode positive, Dₘ₋₁ est une épaisseur du (m-1)ième sous-revêtement d'électrode positive, Dₘ est une épaisseur du mième sous-revêtement d'électrode positive, et m est n'importe quel entier sélectionné de 2 à n ; sur le même côté du collecteur de courant d'électrode positive, le (m-1)ième sous-revêtement d'électrode positive est plus près du collecteur de courant d'électrode positive que le mième sous-revêtement d'électrode positive ; et
éventuellement, parmi les n sous-revêtements d'électrode positive, deux sous-revêtements d'électrode positive adjacents quelconques satisfont à : Aₘ/(Dₘ/Dₘ₋₁)-Aₘ₋₁≥5%.

4. Feuille d'électrode positive selon la revendication 2 ou 3, dans laquelle, dans chaque sous-revêtement d'électrode positive, une proportion en poids du matériau actif d'électrode positive au sodium est de 80 % ou plus.

5. Feuille d'électrode positive selon l'une quelconque des revendications 1 à 4, dans laquelle, dans le revêtement d'électrode positive, le poids total de l'agent de réapprovisionnement en sodium d'électrode positive sacrificiel représente de 0,5 % à 10 % par rapport au poids total du matériau actif d'électrode positive au sodium.

6. Feuille d'électrode positive selon l'une quelconque des revendications 1 à 5, dans laquelle la couche de réapprovisionnement en sodium comprend les constituants suivants en pourcentage en poids : 50 % à 90 % de l'oxyde de métal de transition riche en sodium, 0 à 40 % d'un deuxième matériau actif d'électrode positive au sodium, 0,5 % à 10 % d'un liant, et 0,5 % à 10 % d'un agent électroconducteur.

7. Feuille d'électrode positive selon l'une quelconque des revendications 1 à 6, dans laquelle une proportion de la capacité de réapprovisionnement en sodium fournie par l'oxyde de métal de transition riche en sodium par rapport à une capacité totale de réapprovisionnement en sodium fournie par l'oxyde de métal de transition riche en sodium et l'agent de réapprovisionnement en sodium d'électrode positive sacrificiel est comprise entre 10 % et 90 % ; et
éventuellement, la proportion de la capacité de réapprovisionnement en sodium fournie par l'oxyde de métal de transition riche en sodium par rapport à la capacité totale de réapprovisionnement en sodium fournie par l'oxyde de métal de transition riche en sodium et l'agent de réapprovisionnement en sodium d'électrode positive sacrificiel est comprise entre 50 % et 90 %.

8. Feuille d'électrode positive selon l'une quelconque des revendications 1 à 7, dans laquelle une densité surfacique unilatérale du revêtement d'électrode positive est supérieure à une densité surfacique de la couche de réapprovisionnement en sodium.

9. Feuille d'électrode positive selon la revendication 8, dans laquelle la densité surfacique unilatérale de la couche de réapprovisionnement en sodium est comprise entre 1 g/m² et 20 g/m² ; et la densité surfacique unilatérale du revêtement d'électrode positive est comprise entre 50 g/m² et 500 g/m².

10. Feuille d'électrode positive selon l'une quelconque des revendications 1 à 9, dans laquelle l'oxyde de métal de transition riche en sodium a une formule chimique de NaₓMO_{y}, où M comprend un ou plusieurs éléments parmi Ni, Co, Fe, Mn, Cr, Cu, Mo, Ru, Ir, Sn et Nb ; x est compris entre 1 et 6, et y est compris entre 1 et 4 ; et
éventuellement, l'oxyde de métal de transition riche en sodium comprend un ou plusieurs oxydes parmi Na₂FeO₂, Na₃FeO₃, Na₃FeO₄, Na₅FeO₄, Na₂NiO₂, Na₂CuO₂, Na₆MnO₄ et Na₆CoO₄.

11. Feuille d'électrode positive selon l'une quelconque des revendications 1 à 10, dans laquelle l'oxyde de métal de transition riche en sodium a en outre une couche de revêtement électroconductrice sur la surface.

12. Feuille d'électrode positive selon l'une quelconque des revendications 1 à 11, dans laquelle l'agent de réapprovisionnement en sodium d'électrode positive sacrificiel est un ou plusieurs agents sélectionnés parmi azide de sodium, amide de sodium, phosphure de sodium, sulfure de sodium, peroxyde de sodium, carbonate de sodium, oxalate de sodium, squarate de sodium et nitrite de sodium.

13. Feuille d'électrode positive selon l'une quelconque des revendications 1 à 12, dans laquelle la couche de réapprovisionnement en sodium est en contact direct avec le collecteur de courant d'électrode positive, et/ou le revêtement d'électrode positive est en contact direct avec la couche de réapprovisionnement en sodium.

14. Batterie sodium-ion, comprenant une feuille d'électrode positive selon l'une quelconque des revendications 1 à 13.

15. Dispositif comprenant une batterie sodium-ion selon la revendication 14, le dispositif comprenant un appareil électrique ou un système de stockage d'énergie.
